# EUROPEAN PATENT APPLICATION

(11) **EP 4 383 692 A1**
(43) Date of publication of application: **12.06.2024**
(21) Application number: 22852081.3
(22) Date of filing: 29.07.2022
(51) Int. Cl.: H04M 1/72484, H04M 1/72403, H04M 1/72454, H04M 1/72439

(54) **METHOD AND APPARATUS FOR PROMPTING UNREAD MESSAGE, ELECTRONIC DEVICE AND MEDIUM**

(30) Priority: 06.08.2021 CN 202110904283
(71) Applicant: Vivo Mobile Communication Co., Ltd., Dongguan, Guangdong 523863 (CN)
(72) Inventor: LIANG, Shuangshuang, Hangzhou, Zhejiang 311100 (CN)
(74) Representative: Murgitroyd & Company
(86) International application number: PCT/CN2022/109177
(87) International publication number: WO 2023/011368

(57) **Abstract**

Embodiments of this application provide an unread message prompt method and apparatus, an electronic device, and medium, and relate to the field of communications technologies. The method includes: receiving a first message; and displaying a target emotion mark. The target emotion mark is used to indicate an emotion of a first contact towards the first message, and the first contact is a contact who sends the first message; where the target emotion mark is determined based on target information; and the target information includes at least one of the following: an image of the first contact captured by an electronic device of the first contact and an unread duration of the first message, the unread duration being a duration between a time at which the first message is received and a current time.

## Description

### CROSS-REFERENCE TO RELATED APPLICATION

This application claims priority to Chinese Patent Application No. 202110904283.2, filed in China on August 06, 2021, which is incorporated herein by reference in its entirety.

### TECHNICAL FIELD

This application pertains to the field of communications technologies, and specifically relates to an unread message prompt method and apparatus, an electronic device, and a medium.

### BACKGROUND

With rapid development of communications technologies, users communicate more frequently through social applications on electronic devices.

At present, when unread messages are included in a social application, an electronic device can display the number of unread messages on the application icon of the social application to remind the user that unread messages are included in the social application, so that the user can view the unread messages in the social application by clicking the application icon.

However, with the method, the electronic device only prompts about the total number of unread messages in the social application, and therefore, the user cannot know the senders of these unread messages before viewing them, which leads to poor flexibility in prompting about unread messages by the electronic device.

### SUMMARY

An objective of embodiments of this application is to provide an unread message prompt method and apparatus, an electronic device, and a medium, so as to solve the problem of poor flexibility in prompting about unread messages by electronic devices.

According to a first aspect, an embodiment of this application provides an unread message prompt method. The method includes: receiving a first message; and displaying a target emotion mark, the target emotion mark being used to indicate an emotion of a first contact towards the first message, and the first contact being a contact who sends the first message; where the target emotion mark is determined based on target information; and the target information includes at least one of the following: an image of the first contact captured by an electronic device of the first contact and an unread duration of the first message, the unread duration being a duration between a time at which the first message is received and a current time.

According to a second aspect, an embodiment of this application provides an unread message prompt apparatus. The apparatus includes a receiving module and a display module. The receiving module is configured to receive a first message; and the display module is configured to display a target emotion mark after the receiving module has received the first message, the target emotion mark being used to indicate an emotion of a first contact towards the first message, and the first contact being a contact who sends the first message; where the target emotion mark is determined based on target information; and the target information includes at least one of the following: an image of the first contact captured by an electronic device of the first contact, and an unread duration of the first message, the unread duration being a duration between a time at which the first message is received and a current time.

According to a third aspect, an embodiment of this application provides an electronic device. The electronic device includes a processor, a memory, and a program or instructions stored in the memory and executable on the processor, where when the program or instructions are executed by the processor, steps of the foregoing unread message prompt method according to the first aspect are implemented.

According to a fourth aspect, an embodiment of this application provides a readable storage medium, where the readable storage medium stores a program or instructions, and when the program or instructions are executed by a processor, steps of the foregoing unread message prompt method according to the first aspect are implemented.

According to a fifth aspect, an embodiment of this application provides a chip, where the chip includes a processor and a communications interface, the communications interface is coupled to the processor, and the processor is configured to run a program or instructions to implement the foregoing unread message prompt method according to the first aspect.

In the embodiments of this application, a first message can be received, and a target emotion mark can be displayed. The target emotion mark is used to indicate an emotion of a first contact towards the first message, and the first contact is a contact who sends the first message; where the target emotion mark is determined based on target information; and the target information includes at least one of the following: an image of the first contact captured by an electronic device of the first contact and an unread duration of the first message, the unread duration being a duration between a time at which the first message is received and a current time. With this solution, after receiving the first message sent by the first contact, the electronic device can display a target emotion mark for indicating an emotion of the first contact towards the first message. Therefore, the user can know, based on the target emotion mark, that the electronic device has received unread messages corresponding to the first contact and emotional states of the first contact towards these messages, so that the flexibility of the electronic device in prompting about unread messages can be improved.

### BRIEF DESCRIPTION OF DRAWINGS

FIG. 1 is a schematic flowchart of an unread message prompt method according to an embodiment of this application;
FIG. 2 is a first schematic diagram of an interface to which an unread message prompt method according to an embodiment of this application is applied;
FIG. 3 is a second schematic diagram of an interface to which an unread message prompt method according to an embodiment of this application is applied;
FIG. 4 is a schematic diagram of a relationship between an unread duration corresponding to a message and an emotion of a message sender;
FIG. 5 is a third schematic diagram of an interface to which an unread message prompt method according to an embodiment of this application is applied;
FIG. 6 is a schematic diagram of an unread message prompt apparatus according to an embodiment of this application;
FIG. 7 is a schematic diagram of an electronic device according to an embodiment of this application; and
FIG. 8 is a schematic diagram of hardware of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The term "and/or" in the specification describes an association relationship for describing associated objects and represents that three relationships may exist. For example, A and/or B may represent the following three cases: presence of only A, presence of both A and B, and presence of only B. The symbol "/" in the specification indicates an "or" relationship of associated objects. For example, A/B means A or B.

The terms "first", "second", and the like in the specification and claims of this application are used to distinguish between different objects rather than to describe a specific order or sequence. It should be understood that the data used in this way is interchangeable in appropriate circumstances so that the embodiments of this application can be implemented in other orders than the order illustrated or described herein.

In the embodiments of this application, the word such as "an example" or "for example" is used to represent giving an example, an instance, or an illustration. Any embodiment or design solution described as "an example" or "for example" in the embodiments of this application shall not be interpreted to be more preferential or advantageous than other embodiments or design solutions. To be precise, the terms such as "an example" or "for example" are intended to present a related concept in a specific manner.

In the descriptions of the embodiments of this application, "plurality" means two or more, unless otherwise specified. For example, a plurality of contacts means two or more contacts.

It should be noted that the identifiers in the embodiments of this application may be used to indicate the text, symbols, images, and the like in the information, and may use controls or other containers as carriers for displaying the information, including but not limited to textual identifiers, symbolic identifiers, and image identifiers.

The unread message prompt method and apparatus, electronic device, and medium provided in the embodiments of this application are hereinafter described in detail by using specific embodiments and application scenarios thereof with reference to the accompanying drawings.

The unread message prompt method provided in the embodiments of this application may be applied in scenarios of prompting about an unread message in an application.

For example, when an electronic device receives a message (such as, a first message in the embodiment of this application) sent by a contact (hereinafter, referred to as contact 1, such as a first contact in the embodiment of this application) in an application (hereinafter, referred to as application A), the electronic device may display a target emotion mark for indicating an emotion of the contact 1 towards the message, to prompt the user that an unread message corresponding to the contact 1 is included in the application A. In this way, a user may know, based on the target emotion mark, that the unread message corresponding to the first contact is included in the target application and emotional state of the first contact towards these messages, so that the flexibility of the electronic device in prompting about unread messages can be improved.

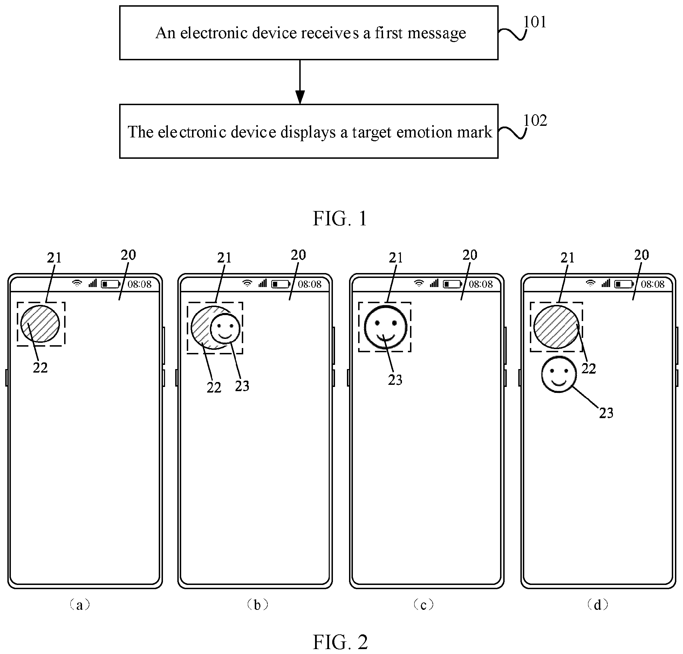

With reference to FIG. 1, an embodiment of this application provides an unread message prompt method. The method may include step 101 and step 102 described below. In the following, an electronic device performing the method is illustratively described as an example.

Step 101. An electronic device receives a first message.

Step 102. The electronic device displays a target emotion mark.

The target emotion mark is used to indicate an emotion of a first contact towards the first message, and the first contact is a contact who sends the first message. The target emotion mark is determined based on target information. The target information may include at least one of the following: an image of the first contact captured by an electronic device (hereinafter, referred to as sending device) of the first contact (mode 1) and an unread duration of the first message (mode 2), the unread duration of the first message being a duration between a time at which the first message is received by the electronic device and a current time.

In this embodiment of this application, the current time may specifically be a current time of the system or a current time of a receiving device.

It should be noted that, for ease of description, in the following, the electronic device of the first contact is hereinafter referred to as the sending device, both of which have the same meaning and are interchangeable, and the electronic device for receiving the first message is referred to as the receiving device, both of which have the same meaning and are interchangeable. Further, unless otherwise specified, the electronic devices in this embodiment of this application are receiving devices.

In this embodiment of this application, the first message is a message that is sent from the sending device to the receiving device and has not yet been viewed.

In this embodiment of this application, the receiving device may receive the first message via an application (hereinafter, referred to as target application) installed in the receiving device. Accordingly, the sending device may send the first message to the receiving device via the target application installed in the sending device.

Optionally, in this embodiment of this application, in the process of displaying the target emotion mark by the electronic device, in a case that the emotion of the first contact towards the first message changes, for example, if an image (hereinafter, referred to as image x) of the first contact sent by the sending device is received again and an emotion indicated by the image x is different from that indicated by the target emotion mark, or if an unread duration range in which the unread duration of the first message is located changes, the electronic device may update the target emotion mark such that the updated target emotion mark can indicate the changed emotion of the first contact.

Further, as the unread duration range in which the unread duration of the first message is located continuously changes, size of the target emotion mark is gradually enlarged to indicate the changed emotion of the first contact by the enlarged size of the target emotion mark. For example, assuming that the unread duration ranges are (0, 1 min), [1, 3 min), and [3, 5 min), the electronic device may adjust the size of the target emotion mark from a to 1.5a when the unread duration of the first message reaches 1 min, and from a to 2a when the unread duration of the first message reaches 3 min.

In the following, the mode 1 and mode 2 are described in detail, respectively.

Mode 1: The target information includes an image of the first contact captured by the sending device of the first contact.

Optionally, in this embodiment of this application, in the mode 1, the sending device may capture an image of the first contact (hereinafter, referred to as target image) in or after sending of the first message and send the target image to the receiving device, so that the receiving device, after receiving the target image, may determine an emotion of the first contact towards the first message through emotion analysis on the target image.

Certainly, after sending the first message, the sending device may alternatively continue to capture and send images of the first contact to the receiving device as the duration since the sending device has sent the first message increases, so that the receiving device may determine the emotion of the first contact towards the first message based on a last received image.

In this embodiment of this application, the sending device may capture the image of the first contact via a front camera of the sending device.

Mode 2: The target information includes an unread duration of the first message.

Optionally, in this embodiment of this application, in the mode 2, a longer unread duration of the first message represents a worse emotion of the first contact towards the first message. For example, as the unread duration increases, the emotion of the first contact changes in the following order: happy, fretful, anxious, sad, angry, desperate, and the like.

In this embodiment of this application, after receiving the first message, the receiving device records the unread duration of the first message, determines an emotion corresponding to the unread duration of the first message based on the correspondence between the unread duration and the emotions, and then determines a target emotion mark based on the emotion.

Optionally, in this embodiment of this application, the electronic device may record a time at which the first message is received, and calculate the unread duration (that is, a duration between the reception of the first message and the current time) corresponding to the first message. For example, assuming that the electronic device receives the first message at 22:20 and the current system time of the electronic device is 23:00, then the unread duration corresponding to the first message is 40 minutes.

For description of the correspondence between the unread duration and the emotions, specifics will be described in detail in the following embodiments. To avoid repetition, details are not described herein again.

Optionally, in this embodiment of this application, in the mode 2, that is, when the target information includes the unread duration of the first message, different unread durations may correspond to different emotions of the first contact, and the different emotions may be indicated by different target emotion marks.

In this embodiment of this application, since the electronic device may use different target emotion marks to indicate the emotions of the first contact at different moments towards the first message, the accuracy of indicating the emotions of the contact can be improved.

Optionally, in this embodiment of this application, the target emotion mark may include at least one of the following: (1) an image corresponding to the first contact, (2) an image obtained after expression changes in the image corresponding to the first contact, and (3) a first mark, where the first mark may be used to indicate an emotion.

The foregoing (1), (2) and (3) are described in detail below, respectively.

### (1) The target emotion mark includes an image corresponding to the first contact

Optionally, in this embodiment of this application, the image corresponding to the first contact may be any image that can uniquely indicate the first contact and the emotion of the first contact. For example, the image corresponding to the first contact may be any one of the following i to iii.

### i. An avatar of the first contact.

In this embodiment of this application, the avatar of the first contact is an avatar set by the first contact in the target application.

It should be noted that when the target emotion mark includes the avatar of the first contact, the emotion indicated by the avatar of the first contact (for example, an emotion obtained by analyzing the expression of the avatar of the first contact) is the same as the emotion determined based on the target information. Alternatively, the avatar of the first contact may be combined with a mark (for example, the first mark described below) that may be indicative of an emotion to collectively form a target emotion mark.

### ii. An image of the first contact.

For description of the image of the first contact, reference may be specifically made to the relevant description in the foregoing embodiment. To avoid repetition, details are not described herein again.

Optionally, in this embodiment of this application, when the target emotion mark is an image of the first contact, the image may be (a) an image obtained from public information of the first contact such as Moments, photos, and videos through big data or (b) an image of the first contact stored in the electronic device.

Optionally, in this embodiment of this application, in the foregoing (a) and (b), the electronic device may first obtain a plurality of images, and then employ artificial intelligence (Artificial Intelligence, AI) technology to perform expression recognition on the plurality of images to determine, from the plurality of photos, a photo (hereinafter, referred to as photo 0) that match the emotion information corresponding to a first duration.

### iii. An image (for example, a puppy image) or the like set by the user for the first contact.

Specifically, the user may pre-set an image for the first contact through a setup entry, where the image set by the user may be an image of the first contact himself/herself or an image other than an image of the first contact, for example, an image of a celebrity or another image (any image such as a group photo, a plant, or a landscape).

Optionally, in this embodiment of this application, different images set by the user for the first contact are used to indicate different emotions. In this way, the electronic device may, after determining the emotion (hereinafter, referred to as emotion 1) of the first contact, select the image for indicating emotion 1 from these images.

It can be understood that in this embodiment of this application, in the foregoing ii and iii, the user may set different images for different emotions of the first contact. In this way, the electronic device may, after determining the emotion of the first contact, select the image for indicating the emotion from the preset images.

It should be noted that in this embodiment of this application, the emotion of the first contact indicated by the avatar of the first contact and the image set by the user for the first contact is the same as the emotion of the first contact determined based on the target information.

### (2) The target emotion mark includes an image obtained after expression changes in the image corresponding to the first contact

For description of the image corresponding to the first contact, reference may be specifically made to the relevant description in the foregoing (1). To avoid repetition, details are not described herein again.

Optionally, in this embodiment of this application, the electronic device may use AI technology to perform expression changes on the image corresponding to the first contact so that the image obtained after expression changes is an image matched with the emotion of the first contact.

### (3) The target emotion mark includes a first mark.

Optionally, in this embodiment of this application, the first mark may be any other mark that can indicate an emotion, such as an expression mark, a color mark, and a text mark.

For example, in an example in which the first mark is a color mark, the yellow mark may indicate happiness; the blue mark indicates anxiety; and the black mark indicates despair.

For example, in an example in which the first mark is an expression image, a smiley face image indicates happiness; a panicky-eyed image indicates anxiety; and a dull-eyed image indicates despair.

For example, in an example in which the first mark is a text mark, the text "happy" indicates happiness; the text "anxiety" indicates anxiety; and the text "despair" indicates despair.

It should be noted that in this embodiment of this application, the foregoing (1), (2), and (3) may be used together or separately, depending on the display form and/or display region of the target emotion mark.

In this embodiment of this application, the target emotion mark may include at least one of an image corresponding to the first contact and an image obtained after expression changes in the image corresponding to the first contact and the first mark, so the flexibility and diversity of the electronic device in indicating the emotion can be improved. In the unread message prompt method provided in this embodiment of this application, after receiving the first message sent by the first contact, the electronic device can display a target emotion mark for indicating an emotion of the first contact towards the first message. Therefore, the user can know, based on the target emotion mark, that the electronic device has received unread messages corresponding to the first contact and emotional states of the first contact towards these messages, so that the flexibility of the electronic device in prompting about unread messages can be improved.

Optionally, in this embodiment of this application, for unread messages corresponding to each contact, a contact may correspond to an emotion mark. The emotion mark is used to indicate an emotion of the contact towards all unread messages corresponding to the contact (one possible implementation), or a contact may correspond to a plurality of emotion marks, each emotion mark is used to indicate an emotion of the contact towards one of the unread messages corresponding to the contact, and different emotion marks correspond to different unread messages (another possible implementation).

Optionally, in this embodiment of this application, in a possible implementation described above, assuming that the first contact corresponds to K unread messages, the first message is a message with the earliest reception time in the K unread messages, and K is a positive integer, then emotions of the first contact towards the K unread messages can all be indicated through a target emotion mark.

For example, in the mode 1, assuming that the sending device also captures and sends an image of the first contact while sending the first message (which is the message with the earliest reception time), then the receiving device may determine an emotion indicated by the image as an emotion of the first contact towards the K unread messages, and determine the target emotion mark based on the emotion.

For another example, in the mode 2, the electronic device may determine a current emotion of the first contact towards the K unread messages based on an unread duration of a first unread message, and determine a target emotion mark based on the emotion.

In this embodiment of this application, the K unread messages are all unread messages corresponding to the first contact.

In this embodiment of this application, since one emotion mark can be used to indicate the emotion of a contact towards all unread messages corresponding to the contact, the user can not only know, based on the target emotion, that the unread messages corresponding to the first contact are included in the electronic device, but also know the emotion of the first contact towards these unread messages, so that the flexibility of the electronic device in prompting about unread messages can be further improved.

Optionally, in this embodiment of this application, in a possible implementation described above, assuming that the first contact corresponds to K unread messages, where the first message is included in the K unread messages, an emotion of the first contact towards each unread message is indicated through an emotion mark, respectively, and K is a positive integer, step 102 can be specifically implemented by the following step A.

Step A. The electronic device displays K emotion marks in sequence.

The K emotion marks are in one-to-one correspondence with the K unread messages, and the K emotion marks include the target emotion mark.

Optionally, in this embodiment of this application, the electronic device may display K emotion marks in sequence in the order of receiving the messages.

Optionally, in this embodiment of this application, in the mode 1, after displaying K emotion marks in sequence, the electronic device updates unread durations for the K unread messages, and display the K emotion marks in sequence determined based on the updated unread durations.

It can be understood that, in a practical implementation, the electronic device may first obtain an unread duration of an unread message, determine an emotion mark based on the unread duration, and display the emotion mark; and then, the electronic device obtains an unread duration of another unread message, determines another emotion mark based on the unread duration of the another unread message, and displays the another emotion mark, and so on, until the electronic device displays an emotion mark determined based on an unread duration of a last unread message.

In this embodiment of this application, when the first contact corresponds to K unread messages, since the emotion marks for indicating the emotion of the first contact towards each unread message can be displayed sequentially, the user can not only know, based on the K emotion marks, that the unread messages corresponding to the first contact are included in the electronic device, but also know the emotion of the first contact towards each of the K unread messages, so that the flexibility of the electronic device in prompting about unread messages can be further improved. Optionally, in this embodiment of this application, step 102 may be specifically implemented by the following step 102a to step 102c.

Step 102a. The electronic device displays a target emotion mark in a first region.

The first region is at least one of the following: at least a partial region displaying a target icon on a desktop, and a region that is on the desktop and is adjacent to the region at which the target icon is displayed, where the target icon is an icon of the target application and the first message is received via the target application.

It should be noted that in this embodiment of this application, the at least a partial region displaying a target icon on a desktop may be understood as a partial region displaying a target icon on the desktop or an entire region displaying a target icon on the desktop.

For example, as shown in (a) of FIG. 2, before the electronic device receives the first message, the electronic device displays a target icon 22 in a region 21 on the desktop 20. After receiving the first message, as shown in (b) of FIG. 2, the electronic device may display a "smiley face image of the first contact" 23 (that is, a target emotion mark) in the right part of region 21, that is, displaying the "smiley face image of the first contact" 23 overlaid on the target icon 23. This means that the electronic device displays the target emotion mark in a partial region on the desktop at which the target icon is displayed. Alternatively, as shown in (c) of FIG. 2, the electronic device may display the "smiley face image" 23 in the entire region 21, that is, overlaying the target emotion mark on the target icon or replacing the target icon with the target emotion mark.

It should be noted that, in this embodiment of this application, the region adjacent to the region at which the target icon is displayed on the desktop can be understood as a region on the desktop surrounding the target icon, for example, a region above the target icon and adjacent to the region at which the target icon is located, a region below the target icon and adjacent to the region at which the target icon is located, a region to the left of the target icon and adjacent to the region at which the target icon is located, and a region to the right of the target icon and adjacent to the region at which the target icon is located, where the above, below, left, and right are illustrated by taking the display of the target icon on the desktop as an example when the desktop is facing the user.

Alternatively, as shown in (a) of FIG. 2, before the electronic device receives the first message, the electronic device displays a target icon 22 in a region 21 on the desktop 20. After receiving the first message, as shown in (d) of FIG. 2, the electronic device may display a "smiley face image" 23 (that is, a target emotion mark) in the region below region 21 and adjacent to a first region. This means that the electronic device displays the target emotion mark in a region on the desktop adjacent to the region at which the target icon is displayed.

Certainly, in a practical application, the electronic device may alternatively display the entire region on the desktop at which the target icon is displayed and display the target emotion mark in a region on the desktop adjacent to the region at which the target icon is displayed.

It should be noted that, in this embodiment of this application, the target emotion mark may include: an image corresponding to the first contact, an image obtained after expression changes in the image corresponding to the first contact, an image corresponding to the first contact and the first mark, an image obtained after expression changes in the image corresponding to the first contact and the first mark.

Optionally, in this embodiment of this application, when the target emotion mark includes the first mark, the target emotion mark may alternatively include an identification of the first contact. The identification of the first contact may be a nickname of the first contact, a remark name by the user for the first contact, and any identification that may indicate the first contact.

Step 102b. The electronic device displays the target emotion mark in a third region.

The third region is a region displaying a message entry corresponding to the first contact (hereinafter, referred to as target entry) on a target message list interface is displayed. The target message list interface is a message list interface in the target application.

Optionally, in this embodiment of this application, the target entry includes an avatar of the first contact and a summary of a message corresponding to the first contact (for example, partial message content of a last received message).

Optionally, in this embodiment of this application, the electronic device may display a target emotion mark on a contact avatar in the target entry. It can be understood that in this embodiment of this application, the electronic device may display different emotion marks on message entries corresponding to different contacts. For other descriptions of step 102b, reference may be specifically made to the relevant description in step 102a. To avoid repetition, details are not described herein again.

In this embodiment of this application, the electronic device may display the target emotion mark at any position of the target entry.

It should be noted that, in this embodiment of this application, the target emotion mark may be at least one of the following: an image corresponding to the first contact, an image obtained after expression changes in the image corresponding to the first contact, and a first mark.

For example, the electronic device may display a mark representing an emotion, such as a smiley face or a crying face, based on the avatar of the first contact. Alternatively, the electronic device may additionally display the mark representing the emotion, such as a smiley face or a crying face, in the target entry, without changing the display of the original avatar.

Step 102c. The electronic device displays the target emotion mark on a current interface in the form of a pop-up window.

It can be understood that, in this embodiment of this application, the electronic device may display the target emotion mark superimposed in the form of a pop-up window on any interface.

Optionally, in this embodiment of this application, the user may trigger the electronic device to move the display position of the target emotion mark and/or cancel the display of the target emotion mark with an input.

Optionally, in this embodiment of this application, the electronic device may display the target emotion mark all the time, or may cancel the display of the target emotion mark after a display duration. It should be noted that, in this embodiment of this application, the target emotion mark may include: an image corresponding to the first contact, an image obtained after expression changes in the image corresponding to the first contact, an image corresponding to the first contact and the first mark, an image obtained after expression changes in the image corresponding to the first contact and the first mark.

Step 102c is illustratively described below with reference to a specific example.

For example, assuming that the electronic device is currently displaying a chat interface (text chat + video or voice call) between the user and a second contact, then the electronic device may display a smiley face image (that is, a target emotion mark) of the first contact through a pop-up window to notify the user that the electronic device has received a message sent by the first contact.

In this embodiment of this application, since the electronic device can display the target emotion mark on different interfaces, the flexibility in displaying the target emotion mark can be improved.

Optionally, in this embodiment of this application, after step 102c, the unread message prompt method provided in this embodiment of this application may further include the following step 103.

Step 103. The electronic device displays a target emotion mark for indicating a changed emotion when the emotion of the first contact towards the first message changes after the display of the target emotion mark has been canceled.

For example, assuming that the emotion indicated by the emotion information corresponding to the unread duration of the first message changes from "happy" to "angry" after the display of the target emotion mark has been canceled for a period of time, then the electronic device may again display an angry image of the first contact (that is, a target emotion mark for indicating the changed emotion) in the form of a pop-up window.

In this embodiment of this application, since after the display of the target emotion mark has been canceled, the electronic device can display in the form of a pop-up window a target emotion mark for indicating a changed emotion when the emotion of the first contact towards the first message changes, the flexibility in displaying the target emotion mark can be further improved.

Optionally, in this embodiment of this application, the target emotion mark may be an emotion mark in Q emotion marks, and each emotion mark is used to indicate a first emotion of the contact towards at least one unread message corresponding to the contact, Q being an integer greater than 1. Then, step 102 may be specifically implemented by using the following step 102e.

Step 102e. The electronic device cyclically displays Q emotion marks based on display durations corresponding to the Q emotion marks.

The display duration corresponding to each emotion mark may be determined based on any one of the following: (1) a duration associated with one of aforementioned contacts and (2) a duration associated with an emotion type of the first emotion.

Optionally, in this embodiment of this application, in the foregoing (1), a correspondence between a contact and a display duration may be preset, and the correspondence may be different between different contacts and display durations. In the foregoing (2), a correspondence between an emotion (which can be specifically emotion information) and a display duration can be preset, and the correspondence may be different between different emotions and display durations.

Optionally, in this embodiment of this application, in a possible implementation described above, the at least one unread message may be all unread messages corresponding to a contact; and in another possible implementation described above, the at least one unread message is one unread message corresponding to a contact.

Optionally, in this embodiment of this application, the Q emotion marks may indicate P contacts, P being a positive integer less than or equal to Q.

Specifically, in a possible implementation described above, P=Q, and each emotion mark is used to indicate an emotion of one of the P contacts towards unread messages corresponding to the contact.

In another possible implementation described above, P<Q, which means that, in this case, a plurality of the Q emotion marks indicate a same contact, and each emotion mark is used to indicate an emotion of a contact towards one unread message corresponding to the contact.

For example, assuming that the P contacts are contact 1 and contact 2, contact 1 corresponding to unread message a and unread message b, and contact 2 corresponding to unread message c and unread message d, then:
in a possible implementation described above, the Q emotion marks may include a first emotion mark and a second emotion mark, where the first emotion mark is used to indicate an emotion of the contact 1 towards the unread message a and the unread message b, and the second emotion mark is used to indicate an emotion of the contact 2 towards the unread message c and the unread message d. In other words, each of the contacts corresponds to one emotion mark; and in another possible implementation described above, the Q emotion marks may include a third emotion mark, a fourth emotion mark, a fifth emotion mark, and a sixth emotion mark, where the third emotion mark is used to indicate an emotion of the contact 1 towards the unread message a, the fourth emotion mark is used to indicate an emotion of the contact 1 towards the unread message b, the fifth emotion mark is used to indicate an emotion of the contact 2 towards the unread message c, and the sixth emotion mark is used to indicate an emotion of the contact 2 towards the unread message d. In other words, each of the messages corresponds to one emotion mark.

Optionally, in this embodiment of this application, the electronic device may display the Q emotion marks in sequence in the order of receiving the unread messages indicated by the Q emotion marks and based on the display duration corresponding to each emotion mark. It can be understood that, in practical implementations, the electronic device may update the Q emotion marks according to the target information after displaying the last emotion mark in the Q emotion marks, and display the updated Q emotion marks in sequence. In this embodiment of this application, in a case that the target emotion mark is an emotion mark in the Q emotion marks, the electronic device may cyclically display the Q emotion marks based on the display durations corresponding to the Q emotion marks. Therefore, the user can not only know, based on the emotion marks, that the unread messages corresponding to which contacts are included in the target application, but also know a first emotion of each contact towards at least one unread message corresponding to the contact, so that the flexibility of the electronic device in prompting about unread messages can be further improved.

In the following, the correspondence between the unread duration and the emotions is illustratively described.

Optionally, in this embodiment of this application, in the mode 1, a correspondence between an unread duration range corresponding to a message and emotion information may be preset, different emotion information is used to indicate different emotions, and different emotions may be indicated by different emotion marks.

For example, the correspondence between the unread duration range corresponding to the message and the emotion information of the message sender (for example, the first contact) may be preset, as shown in Table 1 below.

**Table 1**

| Unread duration range /min | [0,0.3] | (0.3,10] | (10,30] | (30,60] | (60,-) |
|---|---|---|---|---|---|
| Emotion information | Emotion information 1 | Emotion information 2 | Emotion information 3 | Emotion information 4 | Emotion information 5 |

It can be learned from Table 1 that the unread duration range [0,0.3] corresponds to the emotion information 1; the unread duration range (0.3,10] corresponds to the emotion information 2; the unread duration range (10,30] corresponds to the emotion information 3; the unread duration range (30,60] corresponds to the emotion information 4; and the unread duration range (60,-] corresponds to the emotion information 5. In this way, after obtaining an unread duration, the electronic device may look up an unread duration range at which the unread duration is located in Table 1, and determine the emotion information corresponding to the unread duration range as the emotion information corresponding to the unread duration.

It can be understood that in this embodiment of this application, for different contacts, different correspondences between message unread duration ranges and emotion information may be set.

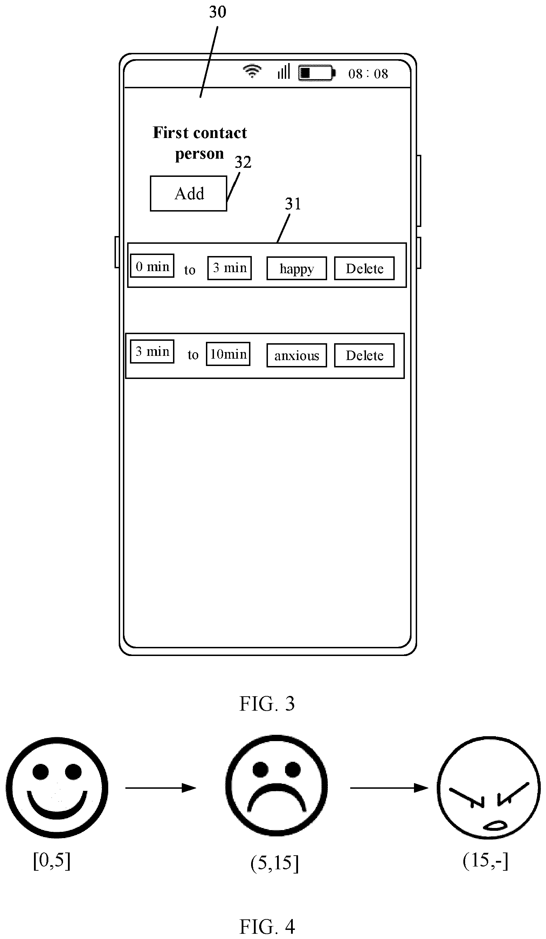

For example, as shown in FIG. 3, the user may set the correspondence between the unread duration range and the emotion information for the first contact through a setting interface 30 corresponding to the first contact. Specifically, the setting interface 30 includes at least one entry, each entry (for example, entry 31 shown in FIG. 3) is used to set a correspondence between one unread duration range and one piece of emotion information, and each entry corresponds to a delete control, the delete control being used for deleting the entry. Further, an add control 32 for adding an entry may also be included in the setting interface 30.

Optionally, in this embodiment of this application, an emotion of a contact may be: happy, fretful, anxious, sad, angry, desperate, or the like.

For example, with reference to Table 1, the emotion information 1 may indicate that the emotion of the message sender is unchanged; the emotion information 2 may indicate that the message sender is happy/expectant; the emotion information 3 may indicate that the emotion of the message sender is fretful; the emotion information 4 may indicate that the emotion of the message sender is anxious; the emotion information 4 may indicate that the message sender is sad; and the emotion information 5 may indicate that the message sender is angry.

It can be seen that a greater unread duration indicates a worse emotion of the message sender (for example, the first contact).

For example, as shown in FIG. 4, when the unread duration corresponding to the message is within [0,5] min, the emotion of the message sender may be happy; when the unread duration corresponding to the message is within (5,15] min, the emotion of the message sender may be sad; and when the unread duration corresponding to the message is greater than 15 min, the emotion of the message sender may be angry.

In practical implementations, different correspondences between the unread duration and the emotion (emotion information) may be set for a contact.

Optionally, in this embodiment of this application, in the mode 2, before step 102, the unread message prompt method provided in this embodiment of this application may further include following steps 104 and 105, and the step 102 may be specifically implemented through the following step 102f.

Step 104. The electronic device receives a second input by a user.

Step 105. In response to the second input, the electronic device sets at least one first correspondence.

Each first correspondence corresponds to a contact, the each first correspondence is a correspondence between an emotion of the contact and a target unread duration, and the target unread duration is an unread duration of an unread message corresponding to the contact.

Step 102f. The electronic device obtains, from the at least one first correspondence, a target correspondence corresponding to the first contact, and displays the target emotion mark based on an unread duration of the first message and the target correspondence.

Optionally, in this embodiment of this application, the second input is any input enabling setting of at least one first correspondence. This may be specifically determined according to actual use requirements, and is not limited in this embodiment of this application.

For other descriptions of step 104 and step 105, reference may be specifically made to the relevant description in the foregoing embodiment. To avoid repetition, details are not described herein again.

In this embodiment of this application, since the electronic device may set different correspondences between emotions of a contact and the unread duration of a message on a contact-by-contact basis, emotions of different contacts may be different for a same unread duration, so that different emotion marks may be determined, which in turn may improve the flexibility and diversity in displaying emotion marks.

Optionally, in this embodiment of this application, after the electronic device displays the target emotion mark, the user may trigger the electronic device to display a message corresponding to the target emotion mark (for example, a first message) by inputting the target emotion mark. Alternatively, the user may trigger the electronic device to display the message corresponding to the target emotion mark by inputting the target emotion mark (for example, a first input described below) and display at least one set of messages on a contact-by-contact basis, each set of messages corresponding to one contact and an emotion type of the emotion of the one contact towards the set of messages being the same as an emotion type of the emotion indicated by the target emotion mark. Optionally, in this embodiment of this application, assuming that an emotion type of the emotion of the first contact towards the first message is a first type, then after step 102, the unread message prompt method provided in this embodiment of this application may further include step 106 and step 107 described below.

Step 106. The electronic device receives a first input for the target emotion mark by the user.

Optionally, in this embodiment of this application, the first input may be any possible form of input on the target emotion mark by the user, such as a touch input or a hover input. This may be specifically determined according to actual use requirements, and is not limited in this embodiment of this application.

For example, in an example in which the first input is a touch input on the target emotion mark by the user, the first input may be an input of the user double-clicking on the target emotion mark.

Step 107. In response to the first input, the electronic device displays a first message and displays N sets of second messages in one-to-one correspondence with N second contacts.

N may be a positive integer, N second types and the first type are a same emotion type, and each second type is an emotion type of an emotion of one second contact towards a set of second messages corresponding to the one second contact. It should be noted that in another possible implementation described above, the electronic device may alternatively display H third messages, the H third messages being messages other than the first messages corresponding to the first contact.

Optionally, in this embodiment of this application, the electronic device may display a first window on the desktop and display a first message in the first window.

Optionally, in this embodiment of this application, the first window may be a session window corresponding to the first contact, in which case a message input box may be included in the first window so as to facilitate the user to return a reply message to the first contact through the message input box.

In this embodiment of this application, the N sets of second messages may be at least some unread messages corresponding to the N second contacts in the target application, which means that the N second contacts are in one-to-one correspondence with the N sets of second messages.

For each of the N second contacts, an emotion type of an emotion of a second contact towards a set of second messages corresponding to the second contact is also the first type.

Optionally, in this embodiment of this application, in a possible implementation described above, for each of the N sets of second messages, messages in a set of second messages are all unread messages corresponding to one second contact. In another possible implementation described above, messages in a set of second messages are all messages for which the emotion type of one second contact towards unread messages corresponding to the one second contact is the first type, where the set of second messages corresponds to the one second contact.

Optionally, in this embodiment of this application, the electronic device may display the first message and the N sets of second messages in a same window (for example, the first window), or alternatively, may display the first message in the first window and display the N sets of second messages in N second windows.

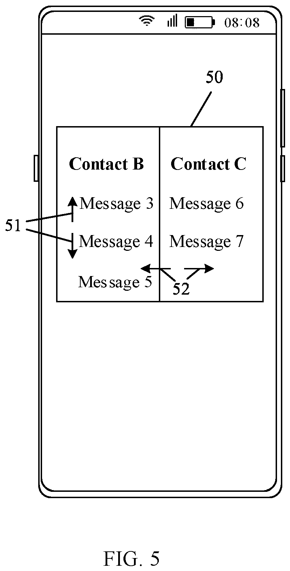

Optionally, in this embodiment of this application, the user may trigger the electronic device to update the messages in the third window, for example, updating message a in a set of messages to message b in the set of messages, by an input of sliding in a first direction (for example, a direction indicated by an arrow 51 in FIG. 5) on a third window (for example, a window 50 shown in FIG. 5).

The third window may be the first window or the N second windows; and the first direction may be an upward, downward, leftward, or rightward direction towards the third window.

It should be noted that the upward and downward directions are illustrated as an example of displaying the third window on a screen of the electronic device when the screen of the electronic device is facing the user.

Optionally, in this embodiment of this application, when the electronic device displays the first message and the N sets of second messages in the first window, and N is greater than 1, the user may trigger the electronic device to update the sets of messages in the first window, for example, updating set 1 of messages to set 2 of messages, by an input of sliding on the first window (for example, the window 50 shown in FIG. 5) in a second direction (for example, a direction shown by the arrow 52 in FIG. 5).

The second direction may be an upward, downward, leftward, or rightward direction with respect to the first window, and the second direction is different from the first direction. For other descriptions of the second direction, reference may be specifically made to the relevant descriptions of the first direction in the foregoing embodiment. To avoid repetition, details are not described herein again. In this embodiment of this application, the user can trigger the electronic device to display the first message and display the N sets of second messages of the same emotion type as the emotion corresponding to the first message through the first input for the target emotion mark of the first contact, and there is no need to first trigger the display of the session list interface of the target application and look up a corresponding session mark of a corresponding contact in the session list interface. Therefore, the unread message prompt method provided in this embodiment of this application can simplify the process of viewing unread messages by the user.

Optionally, in this embodiment of this application, the N second contacts may be contacts in a same application (for example, the foregoing target application), or the N second contacts may be contacts in different applications.

Optionally, in this embodiment of this application, the first contact and the N second contacts are all contacts with an importance level greater than or equal to a predetermined threshold. To be specific, the electronic device may display emotion marks indicative of emotions of contacts towards unread messages based on importance levels of the contacts, to prompt the user that the electronic device includes unread messages corresponding to these more important contacts.

Optionally, in this embodiment of this application, in an example in which the N second contacts and the first contact are the contacts in the target application, the user may set the importance levels for the contacts in the target application. For example, the user may set the importance level to "Important" for a portion of contacts in the target application and default the importance level to "Ordinary" for contacts in the target application other than that portion of contacts. In this way, after receiving a message sent by a contact with an importance level of "Important" (for example, a first contact, a second contact), the electronic device may display a target emotion mark corresponding to the contact.

In this embodiment of this application, when unread messages corresponding to contacts with an importance level greater than or equal to a predetermined threshold are included in the target application, the electronic device can display target emotion marks corresponding to the contacts to prompt the user that unread messages corresponding to these contacts are included in the target application. To be specific, the electronic device can prompt about the unread messages based on the importance levels of the contacts, so as to prevent the user from missing an important message. In this way, the flexibility and accuracy of the electronic device in prompting about unread messages can be further improved.

It should be noted that the unread message prompt method provided in this embodiment of this application may be performed by an unread message prompt apparatus or a control module for performing the unread message prompt method in the unread message prompt apparatus. In this embodiment of this application, the unread message prompt apparatus provided in the embodiments of this application is described by using an example in which the unread message prompt apparatus performs the unread message prompt method.

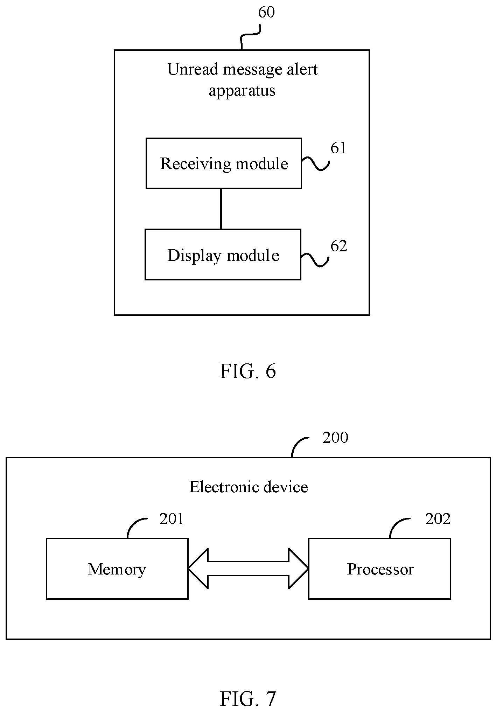

With reference to FIG. 6, an embodiment of this application provides an unread message prompt apparatus 60. The unread message prompt apparatus 60 may include a receiving module 61 and a display module 62. The receiving module 61 may be configured to receive a first message. The display module 62 may be configured to display a target emotion mark after the receiving module 61 has received the first message, the target emotion mark being used to indicate an emotion of a first contact towards the first message, and the first contact being a contact who sends the first message; where the target emotion mark is determined based on target information; and the target information includes at least one of the following: an image of the first contact captured by an electronic device of the first contact, and an unread duration of the first message, the unread duration being a duration between a time at which the first message is received and a current time.

In a possible implementation, the target information may include the unread duration of the first message, where different unread durations correspond to different emotions of the first contact, and the different emotions are indicated by different target emotion marks.

In a possible implementation, the display module 62 may specifically be configured to display a target emotion mark in a first region, the first region being at least one of the following: at least a partial region displaying a target icon on a desktop, and a region that is on the desktop and is adjacent to the region at which the target icon is displayed. Or, the display module 62 may specifically be configured to display the target emotion mark in a third region, the third region being a region displaying a message entry corresponding to the first contact on a target message list interface. Or, the display module 62 may specifically be configured to display the target emotion mark on a current interface in the form of a pop-up window. The target icon is an icon of the target application, the first message is received via the target application, and the target message list interface is a message list interface in the target application.

In a possible implementation, the display module 62 may further be configured to, after the target emotion mark is displayed on a current interface in the form of a pop-up window and then the display of the target emotion mark has been canceled, display a target emotion mark for indicating a changed emotion when the emotion of the first contact towards the first message changes.

In a possible implementation, the target emotion mark may include at least one of the following: an image corresponding to the first contact, an image obtained after expression changes in the image corresponding to the first contact, and a first mark, where the first mark is used to indicate an emotion.

In a possible implementation, the first contact may correspond to K unread messages, where the first message is included in the K unread messages, an emotion of the first contact towards each unread message is indicated through an emotion mark, respectively, and K is a positive integer. The display module 62 may be specifically configured to display K emotion marks in sequence, where the K emotion marks are in one-to-one correspondence with the K unread messages, and the K emotion marks include the target emotion mark.

In a possible implementation, the first contact may correspond to the K unread messages, the first message is a message with the earliest reception time in the K unread messages, and K is a positive integer. The emotions of the first contact towards the K unread messages are all indicated through a target emotion mark.

In a possible implementation, an emotion type of an emotion of the first contact towards the first message may be a first type. The receiving module 61 may further be configured to receive a first input for the target emotion mark by the user after the display module 62 displays the target emotion mark. The display module 62 may further be configured to in response to the first input received by the receiving module 61, display the first message and display N sets of second messages in one-to-one correspondence with N second contacts, N being a positive integer. N second types and the first type are a same emotion type, and each second type is an emotion type of an emotion of one second contact towards a set of second messages corresponding to the one second contact.

In a possible implementation, the target emotion mark may be an emotion mark in Q emotion marks, and each emotion mark is used to indicate a first emotion of a contact towards at least one unread message corresponding to the contact, Q being an integer greater than one. The display module 62 may be specifically configured to cyclically display the Q emotion marks based on display durations corresponding to the Q emotion marks, the display duration corresponding to each emotion mark being determined based on any one of the following: a duration associated with the contact and a duration associated with an emotion type of the first emotion.

In a possible implementation, the unread message prompt apparatus 60 may further include a setting module, and the target information may include the unread duration of the first message. The receiving module 61 may further be configured to receive a second input by a user before the display module 62 displays the target emotion mark. The setting module may be configured to set, in response to the second input received by the receiving module 61, at least one first correspondence, where each first correspondence corresponds to a contact, the each first correspondence is a correspondence between an emotion of the contact and a target unread duration, and the target unread duration is an unread duration of an unread message corresponding to the contact. The display module 62 may be specifically configured to obtain, from the at least one first correspondence, a target correspondence corresponding to the first contact, and display the target emotion mark based on an unread duration of the first message and the target correspondence.

In the unread message prompt apparatus provided in this embodiment of this application, after receiving the first message sent by the first contact, the unread message prompt apparatus can display a target emotion mark for indicating an emotion of the first contact towards the first message. Therefore, the user can know, based on the target emotion mark, that the unread message prompt apparatus has received unread messages corresponding to the first contact and emotional states of the first contact towards these messages, so that the flexibility in prompting about unread messages can be improved.

For the beneficial effects of the various implementations in this embodiment, reference may be specifically made to the beneficial effects of the corresponding implementations in the foregoing method embodiment. To avoid repetition, details are not repeated herein.

The unread message prompt apparatus in this embodiment of this application may be an apparatus, or may be a component, an integrated circuit, or a chip in the terminal. The apparatus may be a mobile electronic device or a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a server, a network attached storage (Network Attached Storage, NAS), a personal computer (personal computer, PC), a television (television, TV), a teller machine, a self-service machine, or the like. This is not specifically limited in this embodiment of this application.

The unread message prompt apparatus in this embodiment of this application may be an apparatus with an operating system. The operating system may be an android (Android) operating system, may be an iOS operating system, or may be another possible operating system. This is not specifically limited in the embodiments of this application.

The unread message prompt apparatus provided in this embodiment of this application is capable of implementing various processes that are implemented in the method embodiments of FIG. 1 to FIG. 5. To avoid repetition, details are not described herein again.

As shown in FIG. 7, an embodiment of this application further provides an electronic device 200, including a processor 202, a memory 201, and a program or instructions stored in the memory 201 and executable on the processor 202. When the program or instructions are executed by the processor 202, the processes of the foregoing embodiments of the unread message prompt method are implemented, with the same technical effects achieved. To avoid repetition, details are not described herein again.

It should be noted that the electronic device in this embodiment of this application includes the foregoing mobile electronic device and non-mobile electronic device.

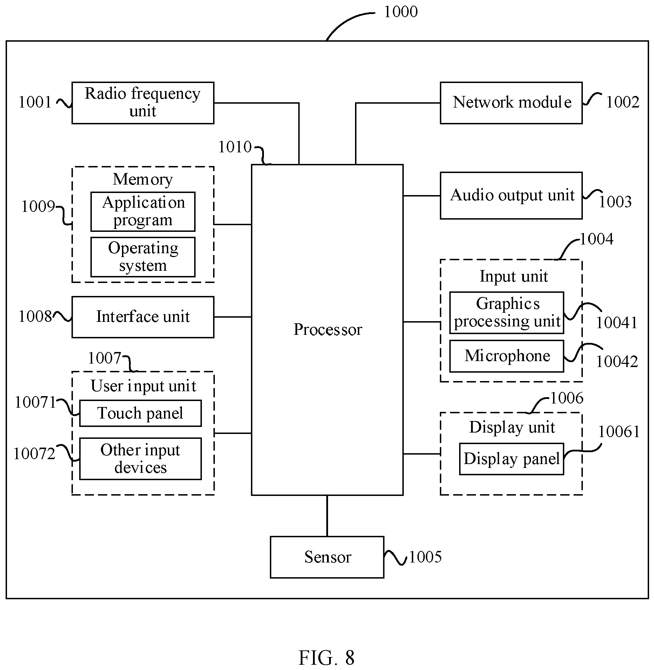

FIG. 8 is a schematic diagram of a hardware structure of an electronic device according to an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Those skilled in the art can understand that the electronic device 1000 may further include a power supply (for example, a battery) that supplies power to various components. The power supply may be logically connected to the processor 1010 through a power management system, so that functions such as charge and discharge management and power consumption management are implemented by using the power management system. The structure of the electronic device shown in FIG. 8 does not constitute a limitation on the electronic device. The electronic device may include more or fewer components than those shown in the figure, or some components may be combined, or there may be a different component layout. Details are not described herein again.

The radio frequency unit 1001 may be configured to receive a first message. The display unit 1006 may be configured to display a target emotion mark after the radio frequency unit 1001 has received the first message, the target emotion mark being used to indicate an emotion of a first contact towards the first message, and the first contact being a contact who sends the first message; where the target emotion mark is determined based on target information; and the target information includes at least one of the following: an image of the first contact captured by an electronic device of the first contact, and an unread duration of the first message, the unread duration being a duration between a time at which the first message is received and a current time.

In a possible implementation, the target information may include the unread duration of the first message, where different unread durations correspond to different emotions of the first contact, and the different emotions are indicated by different target emotion marks.

In a possible implementation, the display unit 1006 may specifically be configured to display a target emotion mark in a first region, the first region being at least one of the following: at least a partial region displaying a target icon on a desktop, and a region that is on the desktop and is adjacent to the region at which the target icon is displayed. Or, the display unit 1006 may specifically be configured to display the target emotion mark in a third region, the third region being a region displaying a message entry corresponding to the first contact on a target message list interface. Or, the display unit 1006 may specifically be configured to display the target emotion mark on a current interface in the form of a pop-up window. The target icon is an icon of the target application, the first message is received via the target application, and the target message list interface is a message list interface in the target application.

In a possible implementation, the display unit 1006 may further be configured to, after the target emotion mark is displayed on a current interface in the form of a pop-up window and then the display of the target emotion mark has been canceled, display a target emotion mark for indicating a changed emotion when the emotion of the first contact towards the first message changes.

In a possible implementation, the target emotion mark may include at least one of the following: an image corresponding to the first contact, an image obtained after expression changes in the image corresponding to the first contact, and a first mark, where the first mark is used to indicate an emotion.

In a possible implementation, the first contact may correspond to K unread messages, where the first message is included in the K unread messages, an emotion of the first contact towards each unread message is indicated through an emotion mark, respectively, and K is a positive integer. The display unit 1006 may be specifically configured to display K emotion marks in sequence, where the K emotion marks are in one-to-one correspondence with the K unread messages, and the K emotion marks include the target emotion mark.

In a possible implementation, the first contact may correspond to the K unread messages, the first message is a message with the earliest reception time in the K unread messages, and K is a positive integer. The emotions of the first contact towards the K unread messages are all indicated through a target emotion mark.

In a possible implementation, an emotion type of the emotion of the first contact towards the first message may be a first type. The radio frequency unit 1001 may further be configured to receive a first input for the target emotion mark by the user after the display unit 1006 displays the target emotion mark. The display unit 1006 may further be configured to in response to the first input received by the radio frequency unit 1001, display the first message and display N sets of second messages in one-to-one correspondence with N second contacts, N being a positive integer. N second types and the first type are a same emotion type, and each second type is an emotion type of an emotion of one second contact towards a set of second messages corresponding to the one second contact.

In a possible implementation, the target emotion mark may be an emotion mark in Q emotion marks, and each emotion mark is used to indicate a first emotion of a contact towards at least one unread message corresponding to the contact, Q being an integer greater than one. The display unit 1006 may be specifically configured to cyclically display the Q emotion marks based on display durations corresponding to the Q emotion marks, the display duration corresponding to each emotion mark being determined based on any one of the following: a duration associated with the contact and a duration associated with an emotion type of the first emotion.

In a possible implementation, the target information may include the unread duration of the first message. The radio frequency unit 1001 may further be configured to receive a second input by a user before the display unit 1006 displays the target emotion mark. The processor 1010 may be configured to set, in response to the second input received by the radio frequency unit 1001, at least one first correspondence, where each first correspondence corresponds to a contact, the each first correspondence is a correspondence between an emotion of the contact and a target unread duration, and the target unread duration is an unread duration of an unread message corresponding to the contact. The display unit 1006 may be specifically configured to obtain, from the at least first correspondence, a target correspondence corresponding to the first contact, and display the target emotion mark based on an unread duration of the first message and the target correspondence.

In the electronic device provided in this embodiment of this application, after receiving the first message sent by the first contact, the electronic device can display the target emotion mark for indicating the emotion of the first contact towards the first message. Therefore, the user can know, based on the target emotion mark, that the electronic device has received unread messages corresponding to the first contact and emotional states of the first contact towards these messages, so that the flexibility of the electronic device in prompting about unread messages can be improved.

For the beneficial effects of the various implementations in this embodiment, reference may be specifically made to the beneficial effects of the corresponding implementations in the foregoing method embodiment. To avoid repetition, details are not repeated herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode display, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (for example, a volume control button or a power on/off button), a trackball, a mouse, and a joystick. Details are not described herein. The memory 1009 may be configured to store software programs and various data which include but are not limited to an application program and an operating system. The processor 1010 may integrate an application processor and a modem processor. The application processor mainly processes an operating system, a user interface, an application program, and the like. The modem processor mainly processes wireless communication. It can be understood that the modem processor may alternatively be not integrated in the processor 1010.

An embodiment of this application further provides a readable storage medium, where the readable storage medium stores a program or an instruction, and when the program or the instruction is executed by a processor, the processes of the foregoing embodiments of the unread message prompt method are implemented, with the same technical effects achieved. To avoid repetition, details are not described herein again.

The processor is the processor of the electronic device in the foregoing embodiment. The readable storage medium includes a computer-readable storage medium such as a computer read-only memory (Read-Only Memory, ROM), a random access memory (Random Access Memory, RAM), a magnetic disk, or an optical disc. An embodiment of this application further provides a chip. The chip includes a processor and a communications interface. The communications interface is coupled to the processor. The processor is configured to run a program or instructions to implement the processes of the foregoing embodiments of the unread message prompt method, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the methods in the foregoing embodiments may be implemented by software with a necessary general hardware platform. Certainly, the methods in the foregoing embodiments may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

Embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. An unread message prompt method, wherein the method comprises:
receiving a first message;
displaying a target emotion mark, wherein the target emotion mark is used to indicate an emotion of a first contact towards the first message, and the first contact is a contact who sends the first message; wherein
the target emotion mark is determined based on target information; and the target information comprises at least one of following: an image of the first contact captured by an electronic device of the first contact, and an unread duration of the first message, the unread duration being a duration between a time at which the first message is received and a current time.

2. The method according to claim 1, wherein the target information comprises the unread duration of the first message; wherein
different unread durations correspond to different emotions of the first contact, and the different emotions are indicated by different target emotion marks.

3. The method according to claim 1 or 2, wherein the displaying a target emotion mark comprises:
displaying the target emotion mark in a first region, the first region being at least one of following: at least a partial region displaying a target icon on a desktop, and a region that is on the desktop and is adjacent to the region at which the target icon is displayed; or
displaying the target emotion mark in a third region, the third region being a region displaying a message entry corresponding to the first contact on a target message list interface; or
displaying the target emotion mark on a current interface in a form of a pop-up window; wherein
the target icon is an icon of a target application, the first message is received via the target application, and the target message list interface is a message list interface in the target application.

4. The method according to claim 3, wherein after the displaying the target emotion mark on a current interface in a form of a pop-up window, the method further comprises:
displaying a target emotion mark for indicating a changed emotion when the emotion of the first contact towards the first message changes after the display of the target emotion mark has been canceled.

5. The method according to claim 1, wherein the target emotion mark comprises at least one of following:
an image corresponding to the first contact, an image obtained after expression changes in the image corresponding to the first contact, and a first mark, wherein the first mark is used to indicate an emotion.

6. The method according to claim 1, wherein the first contact corresponds to K unread messages, wherein the first message is comprised in the K unread messages, an emotion of the first contact towards each unread message is indicated through an emotion mark, respectively, and K is a positive integer; and
the displaying a target emotion mark comprises:
displaying K emotion marks in sequence, wherein the K emotion marks are in one-to-one correspondence with the K unread messages, and the K emotion marks comprise the target emotion mark.

7. The method according to claim 1, wherein the first contact corresponds to K unread messages, the first message is a message with a earliest reception time in the K unread messages, and K is a positive integer; wherein
emotions of the first contact towards the K unread messages are all indicated through a target emotion mark.

8. The method according to claim 1, wherein an emotion type of the emotion of the first contact towards the first message is a first type; and
after the displaying a target emotion mark, the method further comprises:
receiving a first input for the target emotion mark; and
in response to the first input, displaying the first message and displaying N sets of second messages in one-to-one correspondence with N second contacts, N being a positive integer; wherein
N second types and the first type are a same emotion type, and each second type is an emotion type of an emotion of one second contact towards a set of second messages corresponding to the one second contact.

9. The method according to claim 1, wherein the target emotion mark is an emotion mark in Q emotion marks, and each emotion mark is used to indicate a first emotion of a contact towards at least one unread message corresponding to the contact, Q being an integer greater than one; and
the displaying a target emotion mark comprises:
cyclically displaying the Q emotion marks based on display durations corresponding to the Q emotion marks, display duration corresponding to each emotion mark being determined based on any one of following: a duration associated with the contact and a duration associated with an emotion type of the first emotion.

10. The method according to claim 1, wherein the target information comprises the unread duration of the first message; wherein
before the displaying a target emotion mark, the method further comprises:
receiving a second input by a user;
setting, in response to the second input, at least one first correspondence, wherein each first correspondence corresponds to a contact, the each first correspondence is a correspondence between an emotion of the contact and a target unread duration, and the target unread duration is an unread duration of an unread message corresponding to the contact; and
the displaying a target emotion mark comprises:
obtaining, from the at least one first correspondence, a target correspondence corresponding to the first contact; and
displaying the target emotion mark based on the unread duration of the first message and the target correspondence.

11. An unread message prompt apparatus, wherein the apparatus comprises a receiving module and a display module;
the receiving module is configured to receive a first message; and
the display module is configured to display a target emotion mark after the receiving module has received the first message, wherein the target emotion mark is used to indicate an emotion of a first contact towards the first message, and the first contact is a contact who sends the first message; wherein
the target emotion mark is determined based on target information; and the target information comprises at least one of following: an image of the first contact captured by an electronic device of the first contact, and an unread duration of the first message, the unread duration being a duration between a time at which the first message is received and a current time.

12. The apparatus according to claim 11, wherein the target information comprises the unread duration of the first message; wherein
different unread durations correspond to different emotions of the first contact, and the different emotions are indicated by different target emotion marks.

13. The apparatus according to claim 11 or 12, wherein
the display module, specifically configured to display the target emotion mark in a first region, the first region being at least one of following: at least a partial region displaying a target icon on a desktop, and a region that is on the desktop and is adjacent to the region at which the target icon is displayed; or
the display module, specifically configured to display the target emotion mark in a third region, the third region being a region displaying a message entry corresponding to the first contact on a target message list interface; or
the display module, specifically configured to display the target emotion mark on a current interface in a form of a pop-up window; wherein the target icon is an icon of a target application, the first message is received via the target application, and the target message list interface is a message list interface in the target application.

14. The apparatus according to claim 13, wherein
the display module is further configured to, after the display module displays the target emotion mark on a current interface in a form of a pop-up window and then the display of the target emotion mark has been canceled, display a target emotion mark for indicating a changed emotion when the emotion of the first contact towards the first message changes.

15. The apparatus according to claim 11, wherein the target emotion mark comprises at least one of following:
an image corresponding to the first contact, an image obtained after expression changes in the image corresponding to the first contact, and a first mark, wherein the first mark is used to indicate an emotion.

16. The apparatus according to claim 11, wherein the first contact corresponds to K unread messages, wherein the first message is comprised in the K unread messages, an emotion of the first contact towards each unread message is indicated through an emotion mark, respectively, and K is a positive integer; and
the display module is specifically configured to display K emotion marks in sequence, wherein the K emotion marks are in one-to-one correspondence with the K unread messages, and the K emotion marks comprise the target emotion mark.

17. The apparatus according to claim 11, wherein the first contact corresponds to K unread messages, the first message is a message with a earliest reception time in the K unread messages, and K is a positive integer; wherein
emotions of the first contact towards the K unread messages are all indicated through a target emotion mark.

18. The apparatus according to claim 11, wherein an emotion type of the emotion of the first contact towards the first message is a first type; and
the receiving module is further configured to receive a first input for the target emotion mark after the display module displays the target emotion mark; and
the display module is further configured to in response to the first input received by the receiving module, display the first message and display N sets of second messages in one-to-one correspondence with N second contacts, N being a positive integer, wherein N second types and the first type are a same emotion type, and each second type is an emotion type of an emotion of one second contact towards a set of second messages corresponding to the one second contact.

19. The apparatus according to claim 11, wherein the target emotion mark is an emotion mark in Q emotion marks, and each emotion mark is used to indicate a first emotion of a contact towards at least one unread message corresponding to the contact, Q being an integer greater than one; and
the display module is specifically configured to cyclically display the Q emotion marks based on display durations corresponding to the Q emotion marks, display duration corresponding to each emotion mark being determined based on any one of following: a duration associated with the contact and a duration associated with an emotion type of the first emotion.

20. The apparatus according to claim 11, wherein the unread message prompt apparatus further comprises a setting module, and the target information comprises the unread duration of the first message;
the receiving module is further configured to receive a second input by a user before the display module displays the target emotion mark;
the setting module is configured to set, in response to the second input received by the receiving module, at least one first correspondence, wherein each first correspondence corresponds to a contact, the each first correspondence is a correspondence between an emotion of the contact and a target unread duration, and the target unread duration is an unread duration of an unread message corresponding to the contact; and
the display module is specifically configured to obtain, from the at least one first correspondence, a target correspondence corresponding to the first contact, and display the target emotion mark based on the unread duration of the first message and the target correspondence.

21. An electronic device, comprising a processor, a memory, and a program or instructions stored in the memory and executable on the processor, wherein when the program or instructions are executed by the processor, steps of the unread message prompt method according to any one of claims 1 to 10 are implemented.

22. A readable storage medium, wherein the readable storage medium stores a program or instructions, and when the program or instructions are executed by a processor, steps of the unread message prompt method according to any one of claims 1 to 10 are implemented.

23. A computer software product, wherein the computer software product is executed by at least one processor to implement the unread message prompt method according to any one of claims 1 to 10.

24. An electronic device, wherein the electronic device is configured to perform the unread message prompt method according to any one of claims 1 to 10.

25. A chip, wherein the chip comprises a processor and a communications interface, wherein the communications interface is coupled to the processor, and the processor is configured to run a program or instructions to implement the unread message prompt method according to any one of claims 1 to 10.
